# FASCICULE DE BREVET EUROPEEN

(11) **EP 3 711 934 B1**
(45) Date de publication et mention de la délivrance du brevet: **21.12.2022**
(21) Numéro de dépôt: 20164301.2
(22) Date de dépôt: 19.03.2020
(51) Int. Cl.: B29C 70/48, B29C 70/54, B29D 99/00, F02C 7/18, F28F 3/00, F28F 21/06, B29L 31/30, B29L 31/18

(54) **MATERIAU COMPOSITE ET PROCEDE DE REALISATION D'UN TEL MATERIAU COMPOSITE**
VERBUNDMATERIAL UND HERSTELLUNGSVERFAHREN EINES SOLCHEN VERBUNDMATERIALS
COMPOSITE MATERIAL AND METHOD FOR MANUFACTURING SUCH A COMPOSITE MATERIAL

(30) Priorité: 19.03.2019 FR 1902818
(43) Date de publication de la demande: 23.09.2020
(73) Titulaire: ROXEL France, 33160 Saint Médard en Jalles (FR)
(72) Inventeur: FREYDIER, Christian, 18570 LE SUBDRAY (FR)
(74) Mandataire: Atout PI Laplace

(56) Documents cités:
- CN-A- 103 921 453
- CN-U- 207 496 787
- DE-U1-202007 015 789
- US-B2- 8 062 452

## Description

La présente invention se situe dans le domaine de l'échange thermique au niveau des moteurs d'aéronef, et plus généralement tout type de source chaude. Elle concerne un matériau composite et un procédé de réalisation d'un tel matériau composite. L'invention concerne plus particulièrement un procédé de réalisation d'un capot échangeur thermique et un capot échangeur thermique.

Un capot échangeur thermique est disposé sur le moteur, par exemple d'un avion, et est destiné à évacuer les calories émises par le moteur d'avion. Il est situé au-dessus du moteur et est soumis à une température proche de 300°C en continu. Du fait de la température élevée à laquelle il est soumis, le capot échangeur thermique est aujourd'hui fabriqué en titane. Le document CN 207 496 787 décrit un capot moteur avec des ouïes.

L'utilisation du titane dans la fabrication d'un capot échangeur thermique est avantageuse car le titane présente de bonnes propriétés mécaniques en termes de résistance en température. Toutefois, un capot échangeur thermique en titane a un coût matière et de fabrication élevé. De plus, les pièces métalliques sont en général réputées être fragiles en fatigue, surtout dans un milieu exposé à de fortes vibrations. Les documents CN 103 921 453 et DE 20 2007 015789 décrivent des matériaux composite de l'art antérieur.

L'utilisation de céramiques dont la tenue en température est, par essence, particulièrement adaptée, pourrait être envisagée mais leur manque de souplesse engendrerait des fissures et casses du capot.

Les résines organiques traditionnelles sont connues pour ne pas supporter les températures élevées et paraissent difficilement envisageables pour l'application recherchée.

L'invention vise à pallier tout ou partie des problèmes cités plus haut en proposant un matériau composite et un procédé de réalisation d'un tel matériau composite présentant une bonne résistance mécanique et adapté à des températures élevées.

A cet effet, l'invention a pour objet un procédé de réalisation d'un matériau composite pour capot échangeur thermique, selon les caractéristiques de la revendication 1.

Avantageusement, la résine injectée est une résine cyanate-ester.

Selon l'invention, l'étape de superposition de la pluralité de couches de tissu composé de fibres de basalte comprend une étape d'insertion d'au moins une couche de tissu composé de fibres de carbone entre les couches de tissu composé de fibres de basalte.

L'invention concerne aussi un procédé de réalisation d'un capot échangeur thermique, comprenant les étapes du procédé de réalisation d'un matériau composite et comprenant, après l'étape de démoulage, une étape de découpe d'ouïes dans le matériau composite.

Avantageusement, le procédé de réalisation d'un capot comprend, avant ou après l'étape de découpe d'ouïes, une étape d'usinage du matériau composite pour lui donner la forme du capot échangeur thermique.

L'invention concerne aussi un matériau composite pour capot échangeur thermique, selon les caractéristiques de la revendication 5.
- une matrice imprégnant le renfort, constituée d'une résine configurée pour résister à des températures d'au moins 250°C.

Avantageusement, la résine constituant la matrice est une résine cyanate-ester.

Selon un mode de réalisation, le renfort composé d'une pluralité de couches de tissu composé de fibres de basalte est en outre composé d'au moins une couche de tissu composé de fibres de carbone.

L'invention concerne aussi un capot échangeur thermique, comprenant un matériau composite tel que précédemment cité, et des ouïes découpées dans le matériau composite.

L'invention sera mieux comprise et d'autres avantages apparaîtront à la lecture de la description détaillée d'un mode de réalisation donné à titre d'exemple, description illustrée par le dessin joint dans lequel :
La figure 1 illustre les étapes du procédé de réalisation d'un matériau composite selon l'invention ;
La figure 2 illustre les étapes du procédé de réalisation d'un capot échangeur thermique selon l'invention ;
La figure 3 représente schématiquement un matériau composite selon l'invention ;
La figure 4 représente schématiquement une vue de face d'un capot échangeur thermique selon l'invention ;
La figure 5 représente schématiquement une vue isométrique d'un capot échangeur thermique selon l'invention.

Par souci de clarté, les mêmes éléments porteront les mêmes repères dans les différentes figures. Pour une meilleure visibilité et dans un souci de compréhension accrue, les éléments ne sont pas toujours représentés à l'échelle.

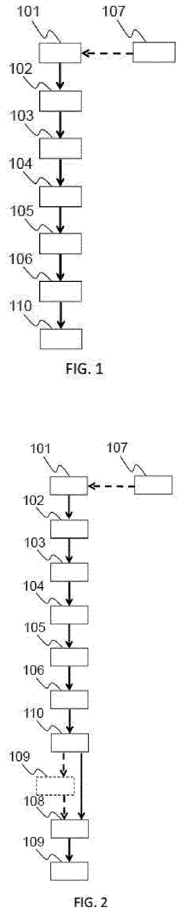

La figure 1 illustre les étapes du procédé de réalisation d'un matériau composite 10 selon l'invention. Le procédé de réalisation d'un matériau composite 10 selon l'invention est particulièrement adapté pour un capot échangeur thermique 20, comme expliqué ci-dessous. Toutefois, le matériau composite 10 obtenu peut être utilisé dans tout autre contexte, avantageusement dans une gamme de température située entre 250 et 300°C. Le procédé de réalisation du matériau composite 10 selon l'invention comprend les étapes suivantes réalisées successivement. Tout d'abord, il comprend une étape 101 de superposition d'une pluralité de couches de tissu composé de fibres de basalte 11.

Selon une réalisation qui ne fait pas partie de l'invention revendiquée, le renfort comprend uniquement des couches de tissu composé de fibres de basalte 11 pour son faible coût et une tenue très largement suffisante en température.

Un renfort comprenant en sus des couches de tissu composé de fibres de carbone 13 permettra d'augmenter les capacités mécaniques du matériau à iso-épaisseur si nécessaire.

La fibre de basalte est faite à partir d'une roche d'origine volcanique. Sa fabrication est relativement complexe. En effet, il faut fondre la roche volcanique broyée pour en extraire les fibres. La fibre de basalte possède des propriétés physico-mécaniques particulièrement intéressantes puisqu'elle résiste au feu. Elle est par ailleurs trois à quatre fois moins chère que la fibre de carbone, de silice ou de céramique. Un tissu en fibres de basalte résiste à une flamme d'environ 1200 à 1400°C en fonction de sa composition et sa pureté.

Ensuite vient une étape 102 de compactage de la pluralité de couches de tissu.

Typiquement, entre 4 et 10 couches de tissu sont superposées et compactées. Une bonne tenue mécanique et résistance à la température est obtenue pour un nombre de couches compris entre 4 et 6. Les couches de tissu compactées forment ce que l'on appelle le renfort.

Le procédé comprend ensuite une étape 103 de disposition de la pluralité de couches compactées dans un moule. Il s'agit d'un moule rigide et fermé, de la forme de la pièce que l'on souhaite réaliser. Si besoin, le renfort peut être calé dans le moule.

L'étape suivante est une étape d'injection 104 d'une résine 12. L'étape 104 d'injection est un moulage par transfert de résine, aussi appelé injection basse pression dans le moule d'une résine 12 chauffée jusqu'à disposer de la viscosité compatible du procédé d'injection, jusqu'à remplissage du moule. La résine 12 est donc chauffée préalablement à l'étape d'injection 104, typiquement à 100-120°C. Le moule, quant à lui, est également chauffé au préalable, afin d'éviter le refroidissement de la résine 12 lors de son transfert dans le moule. La pression d'injection est de l'ordre de quelques bars, par exemple 5 ou 6 bars, et n'excède pas 15 bars. La résine 12 ainsi injectée vient remplir l'espace laissé libre dans le moule. L'injection de résine 12 a lieu au travers du renfort fibreux déjà en place dans le moule. Cette injection est aussi connue sous l'abréviation RTM pour son acronyme anglo-saxon « Resine Transfer Molding ». L'injection peut avoir lieu en un point ou plusieurs points du moule. Ce type d'injection utilise des renforts secs, c'est-à-dire que l'apport de résine 12 se fait en phase finale du procédé, une fois le renfort de la pièce construit. Il n'y a pas besoin d'utiliser des fibres de renfort pré-imprégnées. Un autre avantage est qu'il permet de réaliser une pièce quasiment à sa définition finale, de dimensions précises et présentant un bel état de surface sur toute la surface de la pièce.

L'étape d'injection 104 est suivie d'une étape 105 de chauffage du moule pour former le matériau composite 10. Une attention particulière doit être prêtée à la séquence de chauffage. En effet, le cycle de cuisson de la résine 12 est important afin de garantir les propriétés mécaniques et surtout thermiques finales de la pièce obtenue. Une fois la résine 12 injectée dans le moule, le moule est chauffé à une température d'environ 200°C, avec une montée en température progressive. Si la cuisson est trop rapide ou si certains paliers de cuisson ne sont pas respectés, la pièce n'aura pas les propriétés mécaniques désirées aux températures souhaitées.

Le procédé selon l'invention comprend une étape 106 de démoulage du matériau composite 10 ainsi obtenu. Le moule est ouvert et le matériau composite 10 est démoulé.

Optionnellement, l'étape 106 de démoulage peut être suivie d'une étape 108 de débarbage du matériau composite 10.

Pour finir, le procédé doit, à l'issue de l'étape 106 ou de l'étape 108, comprendre une étape 110 de post-cuisson hors moule afin de garantir les propriétés thermiques et mécaniques finales.

Cette étape 110 nécessite des précautions particulières d'environnement et des créneaux de températures pour ne pas risquer d'oxyder prématurément la résine organique si elle est soumise à l'oxygène de l'air pendant la montée en température. Ainsi, il est recommandé d'effectuer l'étape 110 de post-cuisson sous vide pour éviter la présence d'oxygène qui réagirait avec le cabone présent dans la résine et participerait à brûler la résine. Toutefois, le procédé selon l'invention permet de réaliser l'étape 110 de post-cuisson en milieu ambiant, et permet d'obtenir un matériau composite résistant à des températures de l'ordre de 270-280°C. Le fait de réaliser l'étape 110 en milieu ambiant simplifie le procédé.

Contrairement à la fibre de basalte, la résine, elle, ne supporte généralement pas des environnements à température élevée.

Dans un mode de réalisation préféré, la résine 12 injectée est une résine cyanate-ester. Cette résine possède une bonne stabilité thermique à des températures élevées. Toutefois, la résine cyanate-ester révèle un caractère exothermique pendant le processus de polymérisation. Il est donc impératif de maîtriser le cycle de cuisson lors de l'étape 104 d'injection par RTM pour ne pas griller la résine 12 pendant l'étape 105 de chauffage.

L'étape 101 de superposition de la pluralité de couches de tissu composé de fibres de basalte uniquement comprend une étape 107 d'insertion d'au moins une couche de tissu composé de fibres de carbone 13 entre les couches de tissu composé de fibres de basalte 11. La fibre de carbone a une faible densité (entre 1,7 et 1,9), et présente également une bonne tenue en température. L'insertion d'au moins une couche de tissu composé de fibres de carbone dans les couches de tissu composé uniquement de fibres de basalte permet d'augmenter la capacité mécanique du matériau composite obtenu.

Le procédé présenté permet de réaliser un matériau composite 10 résistant à des températures de l'ordre de 250 - 300°C. Le matériau composite 10 est moins sensible à la sollicitation de type fatigue que le métal et permet donc d'envisager moins de remplacement de pièces lors de son utilisation opérationnelle. Le procédé de réalisation du matériau composite 10 peut servir de base à un procédé de réalisation d'un capot échangeur thermique 20 destiné à évacuer la chaleur produite par un moteur.

La figure 2 illustre les étapes d'un tel procédé de réalisation d'un capot échangeur thermique 20 selon l'invention. Le procédé de réalisation d'un capot échangeur thermique 20 comprend les étapes du procédé de réalisation d'un matériau composite 10 comme décrit précédemment. Dans ce cas, le moule a la forme du capot 20. Il en résulte, après l'étape 106 de démoulage, un capot 20 de dimensions précises, présentant un bel état de surface sur toute la surface de la pièce et quasiment à sa définition finale. De plus, il comprend, après l'étape 106 de démoulage, une étape 108 de découpe d'ouïes 21 dans le matériau composite 10. Les ouïes 21 permettent la circulation d'air à travers le capot échangeur thermique 20.

Le capot échangeur thermique 20 ainsi obtenu est plus léger que son homologue en métal. Le gain en masse est de l'ordre de 20%. Enfin, comme déjà mentionné, le coût de fabrication d'un tel capot est moins élevé que celui d'un capot en titane obtenu par formage.

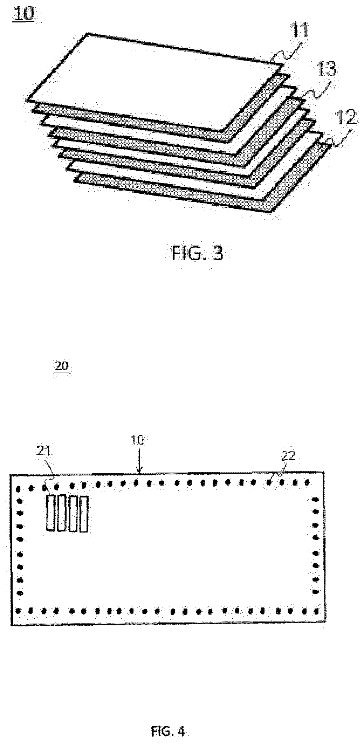

La figure 3 représente schématiquement un matériau composite 10 selon l'invention. Le matériau composite 10 comprend un renfort composé d'une pluralité de couches de tissu composée de fibres de basalte 11 disposées les unes sur les autres et compactées entre elles, et une matrice imprégnant le renfort, constituée d'une résine 12 configurée pour résister à des températures d'au moins 250°C.

Le renfort du matériau composite 10 composé d'une pluralité de couches de tissu composé de fibres de basalte est composé, en plus des couches de tissu composé de fibres de basalte, d'au moins une couche de tissu composé de fibres de carbone 13.

Comme expliqué précédemment, la résine 12 constituant la matrice est une résine cyanate-ester, compatible avec les températures élevées de l'ordre de 250 à 300°C.

La figure 4 représente schématiquement une vue de face d'un capot échangeur thermique 20 selon l'invention. Le capot échangeur thermique 20 est composé du matériau composite 10 précédemment décrit. Il comprend en outre des ouïes 21 découpées dans le matériau composite 10, pour permettre l'évacuation des calories émises par le moteur. Le capot représenté mesure approximativement 500 mm de long et 300 mm de large, avec une épaisseur de l'ordre de quelques millimètres, par exemple 3 à 5 mm. Le capot peut aussi comprendre des perforations 22, afin de permettre la fixation du capot sur le moteur.

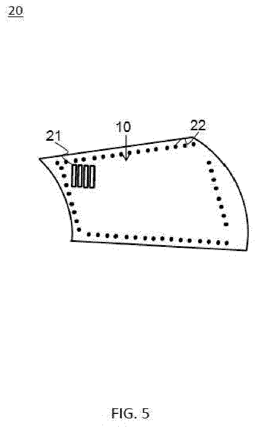

La figure 5 représente schématiquement une vue isométrique d'un capot échangeur thermique 20 selon l'invention. On y voit notamment la forme spécifique du capot destiné à être posé sur le moteur. La forme du capot est donnée par la forme du moule utilisé lors du procédé de réalisation du matériau composite 10.

L'invention a été décrite dans l'exemple d'un capot échangeur thermique destiné à être utilisé sur un moteur. Il faut noter que l'invention s'applique à toute pièce, de toute forme, utilisable dans un environnement de températures élevées autour de 250-300°C.

## Revendications

1. Procédé de réalisation d'un matériau composite pour capot échangeur thermique, comprenant les étapes suivantes réalisées successivement :
- Superposition (101) d'une pluralité de couches de tissu composé de fibres de basalte ;
- Compactage (102) de la pluralité de couches de tissu ;
- Disposition (103) de la pluralité de couches compactées dans un moule;
- Moulage par transfert de résine (104) dans le moule d'une résine configurée pour résister à des températures d'au moins 250°C jusqu'à remplissage du moule;
- Chauffage (105) du moule pour former le matériau composite;
- Démoulage (106) du matériau composite ;
- Post-cuisson (110) du matériau composite,
ledit procédé étant **caractérisé en ce que** l'étape (101) de superposition de la pluralité de couches de tissu composé de fibres de basalte comprend une étape (107) d'insertion d'au moins une couche de tissu composé de fibres de carbone entre les couches de tissu composé de fibres de basalte.

2. Procédé selon la revendication 1, dans lequel la résine injectée est une résine cyanate-ester.

3. Procédé de réalisation d'un capot échangeur thermique, comprenant les étapes du procédé de réalisation d'un matériau composite selon l'une des revendications 1 ou 2, **caractérisé en ce qu'**il comprend, après l'étape (106) de démoulage, une étape (108) de découpe d'ouïes dans le matériau composite.

4. Procédé de réalisation d'un capot échangeur thermique selon la revendication 3, comprenant, avant ou après l'étape (108) de découpe d'ouïes, une étape (109) d'usinage du matériau composite pour lui donner la forme du capot échangeur thermique.

5. Matériau composite pour capot échangeur thermique comprenant :
- un renfort composé d'une pluralité de couches de tissu composé de fibres de basalte disposées les unes sur les autres et compactées entre elles,
- une matrice imprégnant le renfort, constituée d'une résine configurée pour résister à des températures d'au moins 250°C,
**caractérisé en ce que** le renfort composé d'une pluralité de couches de tissu composé de fibres de basalte est en outre composé d'au moins une couche de tissu composé de fibres de carbone disposée entre les couches de tissu composé de fibres de basalte.

6. Matériau composite selon la revendication 5, **caractérisé en ce que** la résine constituant la matrice est une résine cyanate-ester.

7. Capot échangeur thermique, **caractérisé en ce qu'**il comprend un matériau composite selon l'une des revendications 5 ou 6, et des ouïes découpées dans le matériau composite.

## Patentansprüche

1. Verfahren zum Herstellen eines Verbundmaterials für eine Wärmetauscherabdeckhaube, umfassend die folgenden Schritte, die nacheinander ausgeführt werden:
- Übereinanderlagern (101) einer Vielzahl von Schichten von aus Basaltfasern zusammengesetztem Gewebe;
- Verdichten (102) der Vielzahl von Gewebeschichten;
- Anordnen (103) der Vielzahl von verdichteten Schichten in einer Form;
- Harzspritzpressen (104) eines Harzes in die Form, das dafür konfiguriert ist, Temperaturen von mindestens 250 °C bis zum Füllen der Form zu widerstehen;
- Erwärmen (105) der Form zum Bilden des Verbundmaterials;
- Ausformen (106) des Verbundmaterials;
- Nachbrennen (110) des Verbundmaterials,
wobei das Verfahren **dadurch gekennzeichnet ist, dass** der Schritt (101) des Übereinanderlagerns der Vielzahl von Schichten von aus Basaltfasern zusammengesetztem Gewebe, einen Schritt (107) des Einfügens mindestens einer Schicht von aus Carbonfasern zusammengesetztem Gewebe zwischen die Schichten von aus Basaltfasern zusammengesetztem Gewebe umfasst.

2. Verfahren nach Anspruch 1, wobei das eingespritzte Harz ein Cyanat-Ester-Harz ist.

3. Verfahren zum Herstellen einer Wärmetauscherabdeckhaube, umfassend die Schritte des Verfahrens zum Herstellen eines Verbundmaterials nach einem der Ansprüche 1 oder 2, **dadurch gekennzeichnet, dass** es, nach dem Schritt (106) des Ausformens, einen Schritt (108) des Schneidens von Schlitzen in das Verbundmaterial umfasst.

4. Verfahren zum Herstellen einer Wärmetauscherabdeckhaube nach Anspruch 3, umfassend, vor oder nach dem Schritt (108) des Schneidens von Schlitzen, einen Schritt (109) des Bearbeitens des Verbundmaterials, um diesem die Form der Wärmetauscherabdeckhaube zu verleihen.

5. Verbundmaterial für eine Wärmetauscherabdeckhaube, umfassend:
- eine Verstärkung, die aus einer Vielzahl von Schichten von aus Basaltfasern zusammengesetztem Gewebe zusammengesetzt ist, die übereinander angeordnet und miteinander verdichtet sind,
- eine Matritze, die die Verstärkung imprägniert, die aus einem Harz besteht, das dafür konfiguriert ist, Temperaturen von mindestens 250 °C zu widerstehen,
**dadurch gekennzeichnet, dass** die Verstärkung, die aus einer Vielzahl von Schichten von aus Basaltfasern zusammengesetztem Gewebe zusammengesetzt ist, des Weiteren aus mindestens einer Schicht von aus Carbonfasern zusammengesetztem Gewebe, die zwischen den Schichten von aus Basaltfasern zusammengesetztem Gewebe angeordnet sind, zusammengesetzt ist.

6. Verbundmaterial nach Anspruch 5, **dadurch gekennzeichnet, dass** das Herz, das die Matritze bildet, ein Cyanat-Ester-Harz ist.

7. Wärmetauscherabdeckhaube, **dadurch gekennzeichnet, dass** sie ein Verbundmaterial nach einem der Ansprüche 5 oder 6 und in das Verbundmaterial geschnittene Schlitze umfasst.

## Claims

1. A method for producing a composite material for a heat exchanger cover, comprising the following steps carried out successively:
- stacking (101) a plurality of layers of fabric made up of basalt fibres;
- compacting (102) the plurality of fabric layers;
- arranging (103) the plurality of compacted layers in a mould;
- resin transfer moulding (104) a resin in the mould that is configured to withstand temperatures of at least 250°C until the mould is filled;
- heating (105) the mould in order to form the composite material;
- demoulding (106) the composite material;
- post-curing (110) the composite material;
said method being **characterised in that** the step (101) of stacking the plurality of layers of fabric made up of basalt fibres comprises a step (107) of inserting at least one layer of fabric made up of carbon fibres between the layers of fabric made up of basalt fibres.

2. The method according to claim 1, wherein the injected resin is a cyanate ester resin.

3. The method for producing a heat exchanger cover, comprising the steps of the method for producing a composite material according to any of claims 1 or 2, **characterised in that** it comprises, after the demoulding step, a step (108) of cutting vents out of the composite material.

4. The method for producing a heat exchanger cover according to claim 3, comprising, before or after the step (108) of cutting out vents, a step (109) of machining the composite material so that it assumes the shape of the heat exchanger cover.

5. A composite material for a heat exchanger cover comprising:
- a reinforcement made up of a plurality of layers of fabric made up of basalt fibres arranged on top of each other and compacted together;
- a matrix impregnating the reinforcement, formed by a resin configured to withstand temperatures of at least 250°C;
**characterised in that** the reinforcement made up of a plurality of layers of fabric made up of basalt fibres is also made up of at least one layer of fabric made up of carbon fibres arranged between the layers of fabric made up of basalt fibres.

6. The composite material according to claim 5, **characterized in that** the resin forming the matrix is a cyanate ester resin.

7. A heat exchanger cover, **characterized in that** it comprises a composite material according to any one of claims 5 or 6, and vents cut out of the composite material.
